# FASCICULE DE BREVET EUROPEEN

(11) **EP 3 230 773 B1**
(45) Date de publication et mention de la délivrance du brevet: **21.07.2021**
(21) Numéro de dépôt: 15823624.0
(22) Date de dépôt: 09.12.2015
(51) Int. Cl.: G01T 1/169, G01V 5/02, G01V 5/06

(54) **PROCÉDÉ DE DÉTECTION D'ARGILES GONFLANTES DANS UN BASSIN SÉDIMENTAIRE PAR MESURES SPECTROMÉTRIQUES**
SPEKTROMETRISCHE TONQUELLUNGSMESSVERFAHREN IN EINEM SEDIMENTBECKEN
METHOD OF DETECTION OF CLAY SWELLING IN A SEDIMENTARY BASIN BY SPECTROMETRY MEASUREMENTS

(30) Priorité: 11.12.2014 FR 1462241
(43) Date de publication de la demande: 18.10.2017
(73) Titulaire: BRGM, 45060 Orléans Cedex 2 (FR)
(72) Inventeur: PROGNON, François, 45740 Lailly en Val (FR); TOURLIERE, Bruno, 45160 Olivet (FR); RENINGER, Pierre-Alexandre, 94300 Vincennes (FR); PERRIN, José, 45000 Orleans (FR); MARTELET, Guillaume, 45000 Orleans (FR); DEPARIS, Jacques, 45240 La Ferte Saint Aubin (FR); LACQUEMENT, Frédéric, 45600 Viglain (FR); TISSOUX, Hélène, 45160 Olivet (FR)
(74) Mandataire: Andrieux, Benoît
(86) Numéro de dépôt international: PCT/FR2015/053390
(87) Numéro de publication internationale: WO 2016/092210

(56) Documents cités:
- US-A- 5 214 281
- FERTL W H: "Gamma ray spectral logging: A new evaluation frontier", WORLD OIL,, vol. 197, no. 5, 1 octobre 1983 (1983-10-01), pages 99-112, XP001351811,
- YAN SHOUXUN ET AL: "A study on the correlation relationships between smectite contents and spectral absorption indices of swelling soils", GEOSCIENCE AND REMOTE SENSING SYMPOSIUM, 2004. IGARSS '04. PROCEEDINGS . 2004 IEEE INTERNATIONAL ANCHORAGE, AK, USA 20-24 SEPT. 2004, PISCATAWAY, NJ, USA,IEEE, vol. 7, 20 septembre 2004 (2004-09-20), pages 4674-4677, XP010750971, ISBN: 978-0-7803-8742-3
- SABINE CHABRILLAT ET AL: "Use of hyperspectral images in the identification and mapping of expansive clay soils and the role of spatial resolution", REMOTE SENSING OF ENVIRONMENT, vol. 82, no. 2-3, 1 octobre 2002 (2002-10-01), pages 431-445, XP055210697, ISSN: 0034-4257, DOI: 10.1016/S0034-4257(02)00060-3
- KALYONCUOGLU UMIT YALCIN ED - KARTHE DANIEL ET AL: "In situ gamma source radioactivity measurement in Isparta plain, Turkey", ENVIRONMENTAL EARTH SCIENCES, SPRINGER BERLIN HEIDELBERG, BERLIN/HEIDELBERG, vol. 73, no. 7, 24 août 2014 (2014-08-24), pages 3159-3175, XP035466618, ISSN: 1866-6280, DOI: 10.1007/S12665-014-3610-1 [extrait le 2014-08-24]
- HADDJIMITSIS G. DIOFANTOS: SPIE, PO BOX 10 BELLINGHAM WA 98227-0010 USA, vol. 7826, 12 décembre 2010 (2010-12-12), - 12 décembre 2010 (2010-12-12), XP040528575,
- GYOZO JORDAN ET AL: "Sustainable mineral resources management: from regional mineral resources exploration to spatial contamination risk assessment of mining", ENVIRONMENTAL GEOLOGY ; INTERNATIONAL JOURNAL OF GEOSCIENCES, SPRINGER-VERLAG, BERLIN/HEIDELBERG, vol. 58, no. 1, 26 août 2008 (2008-08-26), pages 153-169, XP019705877, ISSN: 1866-6299
- SABTAN ET AL: "Geotechnical properties of expansive clay shale in Tabuk, Saudi Arabia", JOURNAL OF ASIAN EARTH SCIENCES, PERGAMON, AMSTERDAM, NL, vol. 25, no. 5, 1 août 2005 (2005-08-01), pages 747-757, XP027847920, ISSN: 1367-9120 [extrait le 2005-08-01]
- Anand J Puppala ET AL: "DEEP SOIL MIXING TECHNOLOGY FOR MITIGATION OF Project 0-5179 12. Sponsoring Agency Name and Address Project performed in cooperation with the Texas Department of Transportation and the Federal Highway Administration. Project Title: Deep Mixing Technology for Mitigation of Pavement Roughness", , 1 August 2008 (2008-08-01), pages 1-342, XP055632468, Retrieved from the Internet: URL:http://tti.tamu.edu/documents/0-5179-1 .pdf [retrieved on 2019-10-15]

## Description

La présente invention concerne le domaine de la caractérisation de sols sédimentaires argileux, et notamment la reconnaissance et la cartographie de zones sujettes aux phénomènes de retrait gonflement des argiles.

En particulier, l'invention concerne l'utilisation de mesures de rayonnements gamma émis par des radioéléments naturels pour détecter et cartographier la présence d'argile gonflante dans les sols et ainsi déduire les aléas liés au phénomène de retrait-gonflement de ces argiles en contexte de formations sédimentaires.

Il est courant de construire des habitations sur de tels sols. Cependant, un matériau argileux voit sa consistance se modifier en fonction de sa teneur en eau. Ainsi, un matériau argileux est dur et cassant lorsqu'il est desséché, alors qu'il devient plastique et malléable à partir d'un certain niveau d'humidité. Ces modifications de consistance s'accompagnent de variations de volume, dont l'amplitude peut atteindre 40%.

Cette variation de volume entraine des sinistres sur les routes et les bâtiments, notamment sur les maisons individuelles. En effet, en fonction des précipitations, de fortes différences de teneur en eau vont apparaître dans le sol au droit des façades des constructions, au niveau de la zone de transition entre le sol exposé à l'évaporation, et celui qui en est protégé par la construction.

Ces variations de teneur engendrent un gonflement qui se manifeste par des mouvements différentiels et se traduit par des fissurations en façade. Les désordres se manifestent aussi par des décollements entre éléments jointifs (garages, perrons, terrasses), ainsi que par une distorsion des portes et fenêtres, une dislocation des dallages et des cloisons et, parfois, la rupture de canalisations enterrées (ce qui vient aggraver les désordres car les fuites d'eau qui en résultent provoquent des gonflements localisés). L'amplitude de ce phénomène est fonction de l'humidité et du type de matériau argileux.

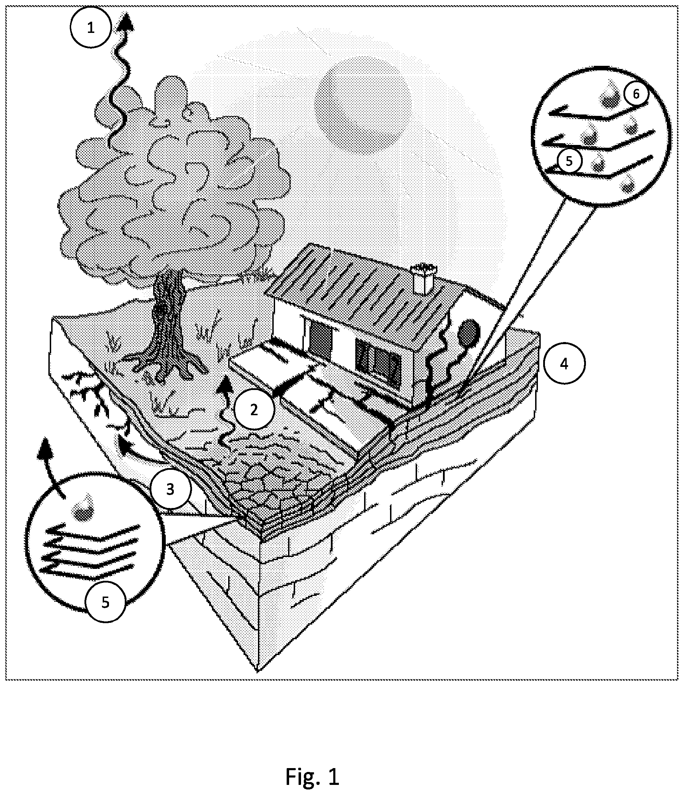

Ce phénomène est connu sous le nom de retrait-gonflement des argiles, appelé RGA. Il est illustré par la figure 1 sur laquelle sont représentés différents mécanismes mis en jeu, tels que l'évapotranspiration (1), l'évaporation (2), l'absorption par les racines (3), ainsi que des éléments mis en jeu, tels que les couches argileuses (4), les feuillets argileux (5) et l'eau interstitielle (6).

Les minéraux de la famille des smectites-montmorillonites sont reconnus comme étant le plus souvent à l'origine des phénomènes RGA. Il est donc fondamental de savoir identifier, avant construction, la présence éventuelle d'argile gonflante au droit de la parcelle, afin de prendre en compte ce paramètre lors de la mise en œuvre du projet.

En effet, dans les dépôts sédimentaires, les minéraux argileux peuvent être les principaux porteurs du signal radiométrique.

Par exemple, le document US 5214281, enseigne un procédé pour localiser des argiles à partir d'une campagne aéroportée de mesures des rayonnements gamma de radio éléments naturels : U, K et Th. La méthode d'analyse consiste à comparer individuellement chaque valeur équivalente en ppm pour le thorium (Th) et en % pour le potassium (K) et l'uranium (U) à des valeurs moyennes.

Cette technique, si elle permet de détecter la présence d'argile à une échelle régionale, ne permet pas d'en déduire un risque de phénomène de retrait-gonflement.

Le document: Gamma ray spectral logging: A new évaluation frontier. W.H.Fertl, World Oil, October 1983, pages 99-112; divulgue une technique pour l'évaluation du gonflement d'argile pour améliorer le forage de puits au moyen de mesures de rayonnements gamma, en obtenant une mesure du thorium et du potassium. L'évaluation se fonde sur une corrélation établie entre la concentration de potassium de la formation et le pourcentage de couches d'argiles expansibles.

Le document: Deep Soil Mixing Technology for Mitigation of Pavement Roughness. Anand J.Puppala et.al. Published Report August 2008, Dept. of Civil Engineering, Univ.of Texas, Arlington and Dept. of Civil and Environmental Engineering, Univ.of Texas, El Paso; divulgue le problème de sinistres liés au phénomène de retrait-gonflement d'argiles et divulgue une cartographie de lithologie et la corrélation stratographique au moyen de mesures de rayonnements gamma de thorium et potassium dans les sols sédimentaires.

Notamment en France, il existe une cartographie nationale de l'aléa risque RGA. Le degré de précision et de fiabilité des précédentes cartes RGA est limité en partie par le fait qu'elles comportent une part de subjectivité liée à l'expertise. La qualité de l'interprétation qui a permis leur élaboration (identification et hiérarchisation des formations à composante argileuses), mais surtout par la qualité des observations qui ont permis la réalisation des cartes géologiques, point de départ de l'étude.

Ainsi, les cartographies des zones à risques du phénomène de retrait gonflement actuelles restent insatisfaisantes.

L'invention a pour but de remédier à ces inconvénients en fournissant un procédé de détection des argiles gonflante dans un bassin sédimentaire.

Ainsi l'objet de l'invention concerne un procédé pour déterminer un risque de sinistre lié à un phénomène de retrait-gonflement d'argiles dans une zone géographique cible, au sein d'un bassin sédimentaire, au moyen de mesures de rayonnements gamma émis par des radioéléments naturels. On réalise les étapes suivantes :
- on sélectionne une zone géographique de calibration pour laquelle des sinistres liés à un phénomène de retrait-gonflement sont connus, et l'on acquiert une corrélation expérimentale entre d'une part un risque de sinistre lié à un phénomène de retrait-gonflement d'argiles gonflantes, et d'autre part, un premier ensemble de mesures de rayonnements gamma émis par les radioéléments naturels potassium (K) et thorium (Th) à la surface de ladite zone géographique de calibration ;
- on réalise au moins un second ensemble de mesures de rayonnements gamma émis par les radioéléments naturels potassium (K) et thorium (Th) à la surface de ladite zone géographique cible ;
- on détermine un risque de sinistre lié à un phénomène de retrait-gonflement d'argiles gonflantes dans ladite zone géographique cible, au moyen de ladite corrélation et du second ensemble de mesures.

Selon l'invention, on peut construire un abaque à partir de la corrélation expérimentale.

Selon l'invention, on peut construire une carte de risque de sinistres liés au phénomène de retrait-gonflement d'argiles gonflantes dans la zone géographique cible.

De façon préférentielle, la zone géographique cible est un bassin sédimentaire.

L'invention concerne également un dispositif pour déterminer un risque de sinistre lié à un phénomène de retrait-gonflement d'argiles gonflantes dans une zone géographique cible, comportant :
- un spectromètre gamma apte à mesurer des rayonnements gamma émis par les radioéléments naturels potassium (K) et thorium (Th) à la surface d'une zone géographique ;
- une mémoire capable de contenir un abaque de corrélation expérimentale entre les risques de sinistre lié à un phénomène de retrait-gonflement d'argiles gonflantes, et un ensemble de mesures de rayonnements gamma émis par les radioéléments naturels potassium (K) et thorium (Th) à la surface d'une zone géographique de calibration ;
- un système d'analyse apte à comparer des mesures de rayonnements gamma émis par les radioéléments naturels potassium (K) et thorium (Th) avec l'abaque ;
- un système permettant d'indiquer le résultat de la comparaison, indiquant la présence ou non d'argiles gonflantes et le risque de sinistre lié à un phénomène de retrait-gonflement.

L'invention sera mieux comprise à la lecture des figures annexées, qui sont fournies à titre d'exemples et ne présentent aucun caractère limitatif, dans lesquelles :
La figure 1 illustre le phénomène de retrait-gonflement des minéraux argileux des argiles gonflantes.
La figure 2 est un organigramme des différentes étapes du procédé selon l'invention.
La figure 3 illustre un schéma de principe d'un abaque constitué à partir d'un levé de spectrométrie gamma de référence, et délimitant trois domaines d'aléa retrait-gonflement des argiles dans un espace K-Th.

Le procédé selon l'invention est basé sur des mesures de rayonnements gamma émis par les radioéléments naturels suivants : le potassium (K) et le thorium (Th). Ces mesures sont réalisées au moyen d'une technique de spectrométrie gamma. La spectrométrie gamma est la mesure de rayonnements gamma de radioéléments au moyen d'un spectromètre. L'énergie d'un rayonnement gamma est caractéristique de l'atome en présence.

Un spectromètre gamma est un appareil qui permet de mesurer l'énergie des photons gamma émis par un échantillon, et d'en comptabiliser le nombre pendant une certaine durée (plus la durée est longue plus la mesure est précise). Cet appareil permet donc d'identifier les radioéléments présents et de déterminer leur activité.

Un spectromètre gamma comporte un organe permettant de transformer les rayonnements gamma en une tension électrique. L'analyse d'un échantillon par spectrométrie gamma conduit ainsi à un spectre, correspondant à un histogramme du nombre de photons gamma détectés en fonction de leur énergie.

Chaque pic du spectre correspond à un rayonnement gamma issu d'un atome radioactif présent dans l'échantillon. L'analyse de la position et de la surface des pics permet de déterminer les radioéléments présents dans l'échantillon analysé, et, pour chaque radioélément présent dans l'échantillon, son activité.

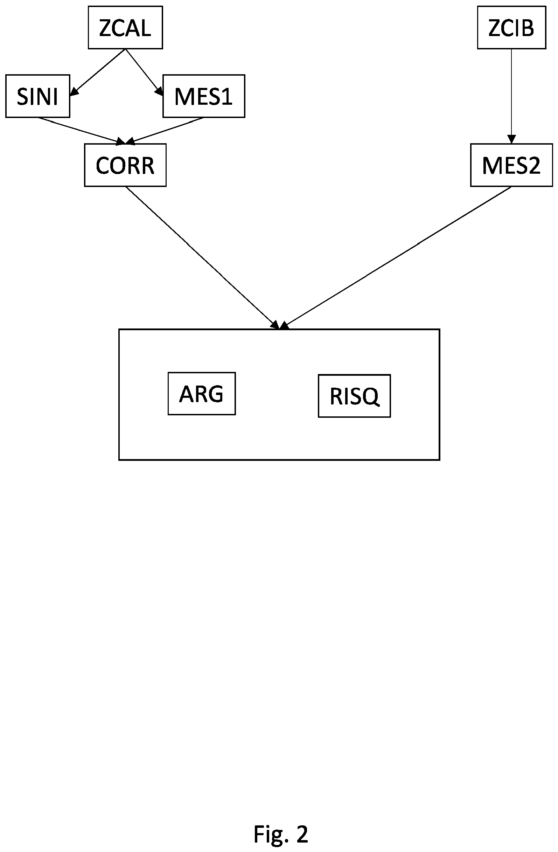

On se réfère maintenant à la figure 2. Le procédé, selon l'invention, pour déterminer un risque (RISQ) de sinistre lié à un phénomène de retrait-gonflement d'argiles gonflantes dans une zone géographique cible (ZCIB), au moyen de mesures (MES2) de rayonnements gamma émis par des radioéléments naturels, comporte les étapes suivantes :
- on détermine une corrélation (CORR) entre mesures spectrométriques (MES1) et sinistres (SINI) ;
- on réalise des mesures (MES2) de rayonnements gamma du potassium et du thorium ;
- on détermine les risques (RISQ) liés au phénomène de retrait-gonflement des argiles et la présence d'argiles gonflantes (ARG).

### 1. Détermination d'une corrélation entre mesures spectrométriques et sinistres

La première étape du procédé consiste à établir une corrélation entre mesures spectrométriques et sinistres, sur une zone géographique de calibration (ZCAL) pour laquelle des sinistres liés à un phénomène de retrait-gonflement sont connus.

Pour ce faire, on sélectionne tout d'abord une zone géographique de calibration pour laquelle des sinistres lié à un phénomène de retrait-gonflement sont connus. Puis, on détermine, si elle n'existe pas déjà, une corrélation expérimentale entre d'une part un « événement » sinistre lié à un phénomène de retrait-gonflement d'argiles gonflantes, et d'autre part, un premier ensemble de mesures de rayonnements gamma émis par les radioéléments naturels potassium (K) et thorium (Th) à la surface de la zone géographique de calibration.

Selon un exemple de réalisation, la corrélation est déterminée sous forme d'un abaque délimitant des domaines d'aléa lié au phénomène de retrait-gonflement des argiles, dans un espace K-Th.

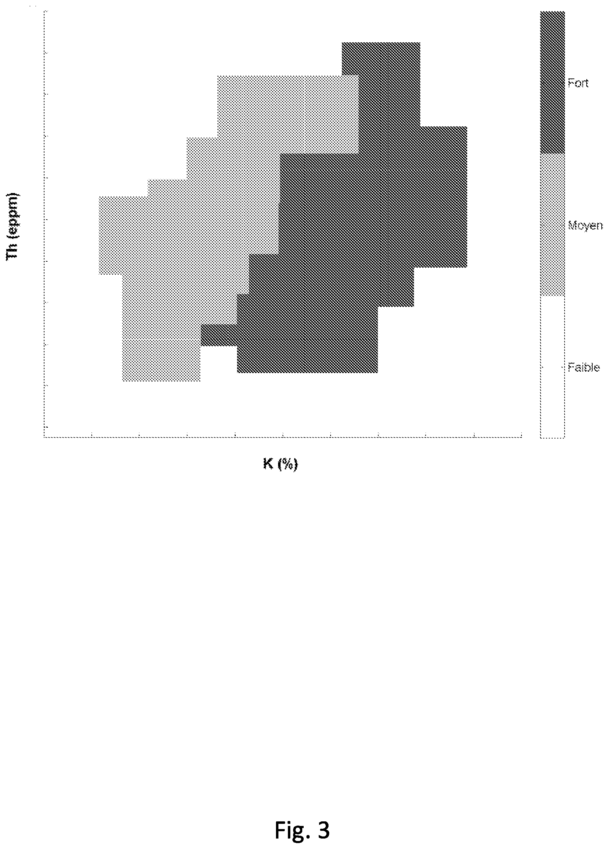

Chaque domaine, correspond à un degré d'aléa. Par exemple, comme l'illustre la figure 3, l'abaque peut comporter trois domaines (D1, D2, D3), correspondant respectivement à un aléa faible, moyen et fort.

On appelle aléa une manifestation d'un phénomène naturel ou anthropique d'occurrence et d'intensité donné.

Pour ce faire, on peut réaliser les étapes suivantes :
- On sélectionne une zone géographique de calibration (différente de la zone cible), dans laquelle ont été identifiés des sinistres liés au phénomène de retrait-gonflement des argiles. De préférence, on sélectionne une zone comportant un grand nombre de tels sinistres, et couvrant généralement plusieurs kilomètres carrés, de façon à obtenir un grand nombre de corrélations entre les mesures spectrométriques et les points locaux où ont été observés des sinistres lié au phénomène de retrait-gonflement des argiles. On sélectionne une zone d'un bassin sédimentaire non métamorphisé, dans laquelle les minéraux argileux sont les principaux porteurs des radio-isotopes émetteurs du signal gamma. Cette sélection peut se faire grâce à une banque de données relatives aux risques naturels.
- On réalise à la surface de la zone géographique sélectionnée des mesures par spectrométrie gamma, et l'on identifie au moins les radioéléments naturels potassium (K) et thorium (Th) sur les spectres issus de ces mesures, et l'on détermine leurs concentrations respectives. Ces mesures peuvent être réalisées au cours d'une campagne aéroportée dans le cas d'une zone de grande superficie, ou au moyen d'un instrument de mesure portatif pour des zones peu étendues. On réalise par exemple un levé aéroporté de gammamétrie spectrale haute résolution selon l'état de l'art de la méthodologie recommandée par l'IAEA (*Guidelines for radioelement mapping using gamma ray spectrometry data IAEA-TECDOC-1363).*
   On utilise des spectromètres calibrés pour la détermination des teneurs en potassium (K) et thorium (Th). Les mesures issues du spectromètre (chocs/ secondes) sont converties en concentrations en teneur pondérales élémentaires en % pour le potassium et en "équivalent ppm" (eppm) pour le Thorium. Pour le Thorium la conversion des teneurs équivalentes est basée sur l'hypothèse d'équilibre des familles radioactives. Pour le Potassium (K) sur le rapport isotopique théorique. Le spectromètre utilisé doit être calibré suivant strictement la procédure IAEA (*Guidelines for radioelement mapping using gamma ray spectrometry data IAEA-TECDOC-1363*). Cette calibration permet de s'affranchir des facteurs instrumentaux.
   Les mesures de spectrométrie gamma sont réalisées pour un temps de mesure donné.
- On peut également remplacer l'acquisition de mesure par l'utilisation de banque de données relatives à des campagnes antérieures. Ces données doivent de préférence comporter le type de spectromètre, sa méthode d'étalonnage ainsi que les temps de mesure utilisé.

L'analyse croisée de la répartition des sinistres (sinistres déclarés) liés au phénomène de retrait-gonflement des minéraux argileux, avec les résultats de spectrométrie gamma, permet d'établir une relation entre les sinistres recensés et l'intensité du rayonnement gamma des éléments K et Th. Les secteurs présentant des sinistres liés au retrait-gonflement ont des signatures radiométriques identifiables.

On peut ainsi construire l'abaque délimitant des domaines d'aléa lié au phénomène de retrait-gonflement des argiles, dans un espace K (%) -Th (eppm).

### 2. Mesures de rayonnements gamma de radio éléments naturels

On réalise à la surface de la zone géographique cible (et non sur la zone géographique de calibration) des mesures par spectrométrie gamma, selon l'état de l'art de la méthodologie recommandée par l'IAEA *(Guidelines for radioelement mapping using gamma ray spectrometry data IAEA-TECDOC-1363*).

Ces mesures peuvent être réalisées au cours d'une campagne aéroportée dans le cas d'une zone de grande superficie, ou au moyen d'un instrument de mesure portatif pour des zones peu étendues. On réalise par exemple un levé aéroporté de gammamétrie spectrale haute résolution

On identifie au moins les radioéléments naturels potassium (K) et thorium (Th) sur les spectres issus de ces mesures, et l'on détermine leurs concentrations respectives en teneur élémentaire (en unités de concentration élémentaire (%) pour le potassium et en teneur équivalente basée sur l'hypothèse d'équilibre des familles radioactives (eppm) pour le Thorium).

### 3. Prévision des risques liés au phénomène de retrait-gonflement des argiles

Au cours de cette étape, on détermine le risque de sinistre lié à un phénomène de retrait-gonflement d'argiles gonflantes dans la zone géographique cible, au moyen de la corrélation (abaque déterminé ou acquise à l'étape 1) et du second ensemble de mesures (acquis à l'étape 2).

Pour ce faire, on peut reporter les mesures de spectrométrie gamma obtenues sur la zone cible (étape 2), dans l'abaque obtenu sur la zone de calibration (étape 1). On en déduit alors un aléa de retrait-gonflement dans la zone cible.

On peut par exemple établir une cartographie de prévision des risques de sinistres liés au phénomène de retrait-gonflement de ces argiles.

En effet, chaque point de mesure, pour lequel une valeur de concentration en potassium et une valeur de concentration en thorium ont été mesurées, peut être renseigné par la valeur de l'abaque indiquant le degré de risque du phénomène de retrait-gonflement.

Le procédé selon l'invention permet ainsi de détecter la présence (ARG) d'argile gonflante dans une zone géographique cible, tel qu'un bassin sédimentaire, et de cartographier des aléas liés au phénomène de retrait-gonflement de ces argiles gonflantes.

**L'invention concerne également un dispositif** pour déterminer un risque de sinistre lié à un phénomène de retrait-gonflement d'argiles gonflantes dans une zone géographique cible, comportant :
- un spectromètre gamma apte à mesurer des rayonnements gamma émis par les radioéléments naturels potassium (K) et thorium (Th) à la surface d'une zone géographique ;
- une mémoire capable de contenir un abaque de corrélation expérimentale entre les risques de sinistre lié à un phénomène de retrait-gonflement d'argiles gonflantes, et un ensemble de mesures de rayonnements gamma émis par les radioéléments naturels potassium (K) et thorium (Th) à la surface d'une zone géographique de calibration ;
- un système d'analyse apte à comparer des mesures de rayonnements gamma émis par les radioéléments naturels potassium (K) et thorium (Th) avec l'abaque ;
- un système permettant d'indiquer le résultat de la comparaison, par exemple sous forme d'un indicateur visuel ou sonore indiquant la présence ou non d'argiles gonflantes et le risque de sinistre lié à un phénomène de retrait-gonflement.

## Revendications

1. Procédé pour déterminer un risque de sinistre lié à un phénomène de retrait-gonflement d'argiles dans une zone géographique cible, au sein d'un bassin sédimentaire, au moyen de mesures de rayonnements gamma émis par des radioéléments naturels, **caractérisé en ce que** l'on réalise les étapes suivantes :
- on sélectionne une zone géographique de calibration pour laquelle des sinistres liés à un phénomène de retrait-gonflement sont connus, et l'on acquiert une corrélation expérimentale entre d'une part un risque de sinistre lié à un phénomène de retrait-gonflement d'argiles gonflantes, et d'autre part, un premier ensemble de mesures de rayonnements gamma émis par les radioéléments naturels potassium (K) et thorium (Th) à la surface de ladite zone géographique de calibration ;
- on réalise au moins un second ensemble de mesures de rayonnements gamma émis par les radioéléments naturels potassium (K) et thorium (Th) à la surface de ladite zone géographique cible ;
- on détermine un risque de sinistre lié à un phénomène de retrait-gonflement d'argiles gonflantes dans ladite zone géographique cible, au moyen de ladite corrélation et du second ensemble de mesures.

2. Procédé selon la revendication 1, dans lequel on construit un abaque à partir de ladite corrélation expérimentale.

3. Procédé selon l'une des revendications précédentes, dans lequel on construit une carte de risque de sinistres liés au phénomène de retrait-gonflement d'argiles gonflantes dans ladite zone géographique cible.

4. Procédé selon l'une des revendications précédentes, dans lequel la zone géographique cible est un bassin sédimentaire.

5. Dispositif pour déterminer un risque de sinistre lié à un phénomène de retrait-gonflement d'argiles gonflantes dans une zone géographique cible, comportant :
- un spectromètre gamma apte à mesurer des rayonnements gamma émis par les radioéléments naturels potassium (K) et thorium (Th) à la surface d'une zone géographique ;
- une mémoire capable de contenir un abaque de corrélation expérimentale entre les risques de sinistre lié à un phénomène de retrait-gonflement d'argiles gonflantes, et un ensemble de mesures de rayonnements gamma émis par les radioéléments naturels potassium (K) et thorium (Th) à la surface d'une zone géographique de calibration ;
- un système d'analyse apte à comparer des mesures de rayonnements gamma émis par les radioéléments naturels potassium (K) et thorium (Th) avec l'abaque ;
- un système permettant d'indiquer le résultat de la comparaison, indiquant la présence ou non d'argiles gonflantes et le risque de sinistre lié à un phénomène de retrait-gonflement.

## Patentansprüche

1. Verfahren zur Bestimmung eines Schadensrisikos, das mit einem Schrumpfungs-Quellungs-Phänomen von Tonen in einer geographischen Zielzone innerhalb eines Sedimentbeckens zusammenhängt, mittels Gammastrahlenmessungen, die von natürlichen Radioelementen emittiert werden, **dadurch gekennzeichnet, dass** die folgenden Schritte durchgeführt werden:
- eine geografische Kalibrierungszone wird ausgewählt, für die Schäden im Zusammenhang mit einem Schrumpfungs-Quellungs-Phänomen bekannt sind, und eine experimentelle Korrelation zwischen einerseits einem Schadensrisiko im Zusammenhang mit einem Schrumpfungs-Quellungs-Phänomen von Quelltonen und andererseits einem ersten Satz von Gammastrahlenmessungen, die von den natürlichen Radioelementen Kalium (K) und Thorium (Th) an der Oberfläche der geografischen Kalibrierungszone emittiert wird, erfasst wird;
- mindestens ein zweiter Satz von Gammastrahlenmessungen wird durchgeführt, die von den natürlichen Radioelementen Kalium (K) und Thorium (Th) an der Oberfläche der geografischen Zielzone ausgesendet werden;
- mit Hilfe der Korrelation und des zweiten Satzes von Messungen wird ein Schadensrisiko bestimmt, das mit dem Schrumpfungs-Quellungs-Phänomen von Quelltonen in der geografischen Zielzone zusammenhängt.

2. Verfahren nach Anspruch 1, wobei ausgehend von der experimentellen Korrelation ein Diagramm konstruiert wird.

3. Verfahren nach einem der vorangehenden Ansprüche, wobei eine Karte des Schadensrisikos erstellt wird, das mit dem Schrumpfungs-Quellungs-Phänomen von Quelltonen in der geographischen Zielzone zusammenhängt.

4. Verfahren nach einem der vorangehenden Ansprüche, wobei die geografische Zielzone ein Sedimentbecken ist.

5. Vorrichtung zur Bestimmung eines Schadensrisikos, das mit dem Schrumpfungs-Quellungs-Phänomen von Quelltonen in einer geographischen Zielzone zusammenhängt, umfassend:
- ein Gammaspektrometer, das in der Lage ist, Gammastrahlen zu messen, die von den natürlichen Radioelementen Kalium (K) und Thorium (Th) an der Oberfläche einer geografischen Zone ausgesendet werden;
- einen Speicher, der in der Lage ist, ein Diagramm der experimentellen Korrelation zwischen den Schadensrisiken, die mit dem Schrumpfungs-Quellungs-Phänomen von Quelltonen zusammenhängen, und einem Satz von Gammastrahlungsmessungen, die von den natürlichen Radioelementen Kalium (K) und Thorium (Th) an der Oberfläche von einer geografischen Kalibrierungszone ausgesendet werden, zu enthalten;
- ein Analysesystem, das in der Lage ist, Gammastrahlungsmessungen, die von den natürlichen Radioelementen Kalium (K) und Thorium (Th) ausgesendet werden, mit dem Diagramm zu vergleichen;
- ein System zur Anzeige des Vergleichsergebnisses, das das Vorhandensein oder Nichtvorhandensein von Quelltonen und das Schadensrisiko, das mit einem Schrumpfungs-Quellungs-Phänomen zusammenhängt, anzeigt.

## Claims

1. Method for determining a risk of damage due to shrinkage-swelling of clay in a target geographical area within a sedimentary basin by means of measurements of gamma rays emitted by natural radioelements, **characterized in that** the following steps are carried out:
- a geographical calibration zone is selected for which damages due to a shrinkage-swelling phenomenon are known, and an experimental correlation is acquired between, on the one hand, a risk of damage due to a shrinkage-swelling phenomenon of swelling clays and, on the other hand, a first set of gamma radiation measurements emitted by the natural radioelements potassium (K) and thorium (Th) at the surface of the said geographical calibration zone;
- at least a second set of measurements of gamma radiation emitted by the natural radioelements potassium (K) and thorium (Th) is carried out at the surface of the said target geographical area;
- a risk of damage due to shrinkage-swelling of swelling clays in said target geographical area is determined by means of said experimental correlation and the second set of measurements.

2. The method of claim 1, wherein an abacus is constructed from said experimental correlation.

3. The method according to one of the preceding claims, in which a risk map of damages due to the phenomenon of shrinkage-swelling of swelling clays is constructed in the said target geographical area.

4. A method according to any of the preceding claims, wherein the geographical target area is a sedimentary basin.

5. Device for determining a risk of damage due to shrinkage-swelling of swelling clays in a target geographical area, comprising:
- a gamma spectrometer adapted to measure gamma radiation emitted by the natural radioelements potassium (K) and thorium (Th) at the surface of a geographical area;
- a memory adapted to contain an abacus of experimental correlation between the risk of damage due to a shrinkage-swelling phenomenon in swelling clays and a set of measurements of gamma radiation emitted by the natural radioelements potassium (K) and thorium (Th) at the surface of a geographical calibration zone;
- an analysis system adapted to compare measurements of gamma radiation emitted by the natural radioelements potassium (K) and thorium (Th) with the abacus;
- a system to indicate the result of the comparison, indicating the presence or absence of swelling clays and the risk of damage due to shrinkage-swelling.
